# EUROPEAN PATENT SPECIFICATION

(11) **EP 2 602 056 B1**
(45) Date of publication and mention of the grant of the patent: **12.08.2015**
(21) Application number: 11425294.3
(22) Date of filing: 07.12.2011
(51) Int. Cl.: B23Q 1/70, B23Q 16/10

(54) **tool-holding spindle with rotation locking means**
Werkzeugspindel mit Mitteln zum Blockieren der Rotation
Broche porte-outil avec moyens de blocage de la rotation

(43) Date of publication of application: 12.06.2013
(73) Proprietor: HURCO COMPANIES INC., Indianapolis, IN 46268 (US)
(72) Inventor: De Bernardi, Franco, 21052 Busto Arsizio (VA) (IT)
(74) Representative: Bittner, Thomas L.

(56) References cited:
- EP-A1- 0 887 134
- EP-A1- 1 409 197

## Description

The present invention concerns a spindle, in particular a tool-holding electric spindle for machine tools.

Tool-holding spindles or electric spindles for supporting rotary tools for use in milling, drilling operations, etc., are known and widely used.

Tool-holding spindles or electric spindles are also known that are able to support not only rotary tools but also fixed tools when they are required to carry out operations with a tool fixed for turning. When it is required to support fixed tools for turning operations, the rotary part of the spindle is connected and locked to the fixed part thereof; on the other hand, when it is required to support rotary tools for milling, drilling operations, etc., the movable part must be free to rotate around the fixed part being connected to the latter only by rotary constraints, being pulled by a *per se* conventional electric motor, connected to the fixed part.

A known tool-holding spindle according to the preamble of claim 1 is described in document EP 1 409 197. This spindle comprises a stationary part defining a cavity in which a rotary part is housed for the alternative support and positioning of cutting tools and of rotary tools for drilling and/or milling. The rotary part is supported by two groups of rolling-contact bearings, a front one and a rear one, the outer shell of which is fixedly connected to the stationary part whereas the inner shell is fixedly connected to the rotary part. The spindle also comprises connection means able to be moved between a first position in which they connect together respective connection means fixedly connected to the rotary part and connection means fixedly connected to the stationary part, making the rotary part fixedly connected to the stationary part, and a position in which these connection means are axially disengaged from the connection means, thus allowing the rotary part to be set in rotation with respect to the stationary part. The spindle also comprises a clearance recovery mechanism that is operative only when the rotary part is free to rotate about the stationary part. Such a clearance recovery mechanism comprises a ring that engages the outer shell of the rear bearings. This ring is able to be moved in a cavity under the thrust of coil springs that act against the bottom of a seat formed in the fixed part and that are preloaded to thrust the ring in the opposite direction to that according to which the connection means act to lock the rotary part with respect to the fixed part so as to determine a removal of the bearing cage of the front bearing, during locking.

The aforementioned spindle has the drawback of requiring an axial displacement action on bearings. Since the bearings are, *per se*, characterised by high precision, the extent of the axial displacement must be limited in order to avoid compromising the correct operation of the bearings themselves. A further drawback lies in the fact that said front bearings must always be mounted in tandem (oblique contact orientated the same way) so as to allow the removal of the bearing cage necessary to lock the spindle, with all of the limitations of this type of assembly that consist of a limited rigidity that does not allow heavy work. In order to obtain this it is necessary to increase the size of the bearings, which is not always possible, due to the bulk involved, and is certainly more expensive.

Another example of a tool-holding spindle is described in document US 6,615,466. Such a document describes a tool-holding head that comprises a stationary housing, a tool-holder, a rotary spindle coupled with the tool-holder and first and second bearings arranged with the inner shell connected to the rotary spindle. The tool-holding head also comprises a sliding element connected to the outer shell of the bearings, arranged around the outer shell of the first bearings and having a conical shape. A control device is also provided, coupled with the sliding element to move it between a locked position and an unlocked position in which the sliding element couples and decouples with a conical surface carried by the stationary housing. The aforementioned spindle has the drawback of requiring a substantial axial stroke to achieve the coupling and decoupling of the conical surfaces. Moreover, the conical coupling requires substantial forces when it is necessary to decouple and inclination parameters of the cone of relatively large size to keep said forces down and it may not be very strong against torsion loads that, in some operative conditions, can reach significant values.

Document EP 0 887 134 A1 discloses a tool spindle fixing device of a composite machine tool in which rotating-tool process is performed by driving a tool spindle into rotation with a rotating tool fitted to the tool spindle rotatably supported to a tool headstock, or in which turning process in performed by driving a work into turning with the tool spindle fixed to the tool headstock and with a turning tool fitted to the tool spindle. There is a fixed-side coupling having numerous engaging teeth fixed to the tool headstock. There is a rotating-side coupling having numerous engaging teeth fixed the tool spindle so that the rotating-side coupling is placed within the fixed-side coupling and coaxial with the fixed-side coupling. The engaging teeth of the two couplings form the same plane. A connection coupling is provided having numerous engaging teeth, the connection coupling being provided on the tool-headstock side so as to be advanceable toward and retreatable from the fixed-side, rotating-side couplings. The engaging teeth of the connection coupling are engaged or disengaged with the engaging teeth of both fixed-side and rotating-side couplings, by which the tool spindle is fixed or unfixed to the tool headstock.

In view of the state of the art described above, there is a need for a tool-holding spindle that allows the rotary part to be effectively locked and unlocked with respect to the stationary part, avoiding mechanically stressing the support bearings of the rotary part.

The purpose of the present invention is to propose a tool-holding spindle having structural and functional characteristics such as to satisfy the aforementioned requirements and at the same time to avoid the aforementioned drawbacks with reference to the prior art.

Such a purpose is achieved by a tool-holding spindle in accordance with claim 1. Further characteristics and advantages of the tool-holding spindle according to the present invention will become clearer from the following description of a preferred embodiment, given for indicating and not limiting purposes, with reference to the attached figures, in which:
- figure 1a shows a section view of a spindle in accordance with the present invention in a first operative configuration,
- figure 1b shows a view of the spindle of figure 1 in a second operative configuration,
- figure 2 shows a section view of a part of a spindle in accordance with a different embodiment of the present invention.

With reference to the attached figures, reference numeral 1 globally indicates a tool-holding spindle in accordance with the present invention.

The spindle 1 comprises a stationary part 10 defining a cavity 11 extending along a longitudinal axis X-X and a rotary part 20 mounted in the cavity 11 to rotate with respect to the stationary part 10 around the longitudinal axis X-X.

The spindle 1 extends along the longitudinal axis X-X between a front portion 2 and a rear portion 3.

The rotary part 20 is intended to support a tool (not shown in the figures). Such a tool can be a fixed tool, to be used for turning operations, or a rotary tool.

In order to set the rotary part 20 in rotation, the spindle 1 comprises electric actuation means 30, in the example an electric motor, having a stator 31 fixed to the stationary part 10 and a rotor 32 coupled with the rotary part 20, arranged concentrically coaxial to the rotary part 20 and suitable for being set in rotation around the axis X-X to set a rotary tool in rotation.

For this purpose, the rotary part 20 has a first portion 21 intended to receive and hold a tool and a second portion 22 intended to couple coaxially with the rotor 32 of the electric motor 30 or, alternatively, to act as a rotor itself.

In the example, the first portion 21 and the second portion 22 respectively define the front and rear end portion of the rotary part 20.

In order to receive and hold a tool, the portion 21 has a seat 21a for the connection of the tang of a tool.

The spindle 1 also comprises a first group of bearings 40 and a second group of bearings 50 spaced along the longitudinal axis X-X from the first group of bearings 40.

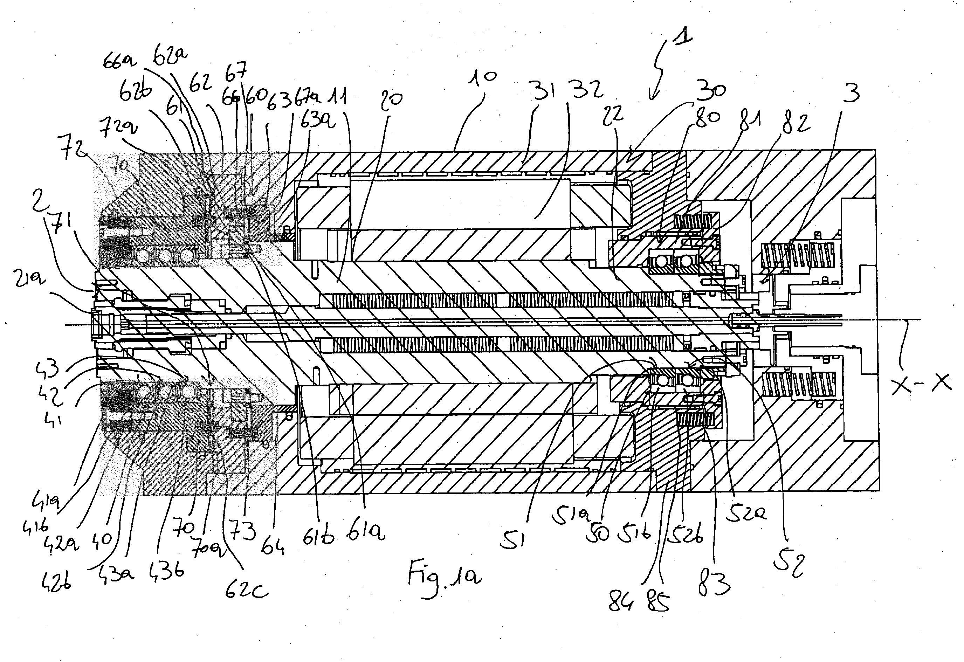

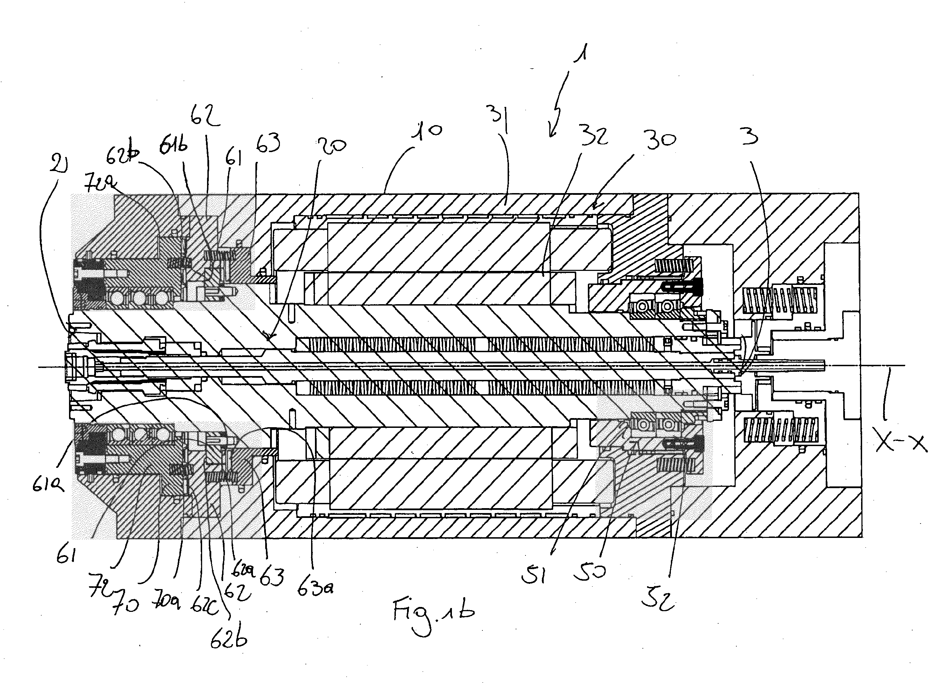

In the example of figures 1a and 1b, the first group of bearings 40 comprises three bearings 41, 42, 43 the arrangement of which cannot be deprived from the bearing cage, being arranged in an "O"

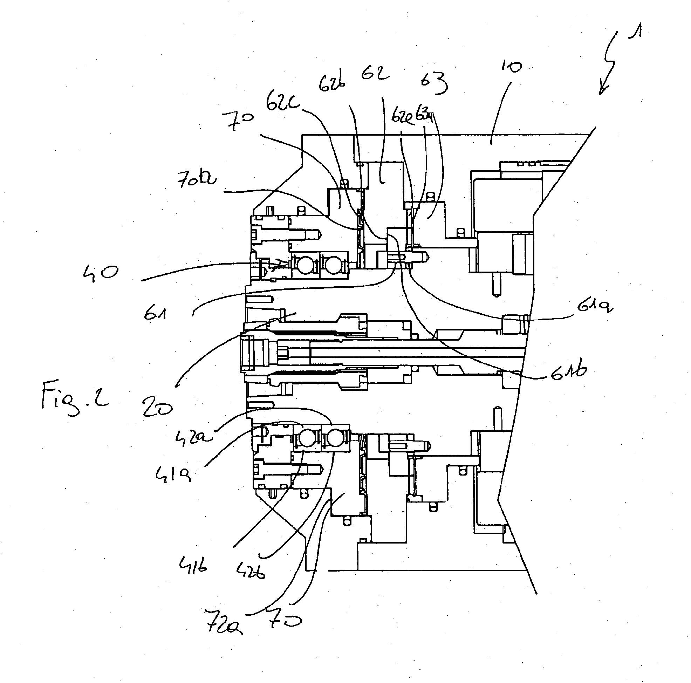

(an oblique pair in tandem against an opposite oblique pair). Whereas in the example of figure 2, the group of bearings 40 comprises two bearings 41, 42 that can be mounted opposite one another in an "O" or in tandem according to the operative performance requirements.

The second group of bearings 50 comprises two bearings 51, 52.

The first group of bearings 40 is arranged in the front portion 2 of the spindle 1 whereas the second group of bearings 50 is arranged in the rear portion 3 of the spindle 1.

Each bearing has an inner ring fixed to the rotary part 20 and an outer ring.

The bearings 41, 42, 43 respectively comprise an inner ring 41a, 42a, 43a fixed to the rotary part 20 and an outer ring 41b, 42b, 43b.

The bearings 51, 52 respectively comprise an inner ring 51a, 52a fixed to the rotary part 20 and an outer ring 51b, 52b.

Hereafter, for the sake of brevity, we shall refer in a non-limiting manner to the bearing 41 for the first group of bearings 40 and to the bearing 51 for the second group of bearings 50, with it being understood that the characteristics of the bearing 41 also apply to the bearings 42 and, if present, 43, just as the characteristics of the bearing 51 also apply to the bearing 52.

The spindle 1 also comprises locking means 60 that are movable between a locked configuration (figure 1a) and an unlocked configuration (figure 1b) respectively, to lock and unlock the rotary part 20 with respect to the stationary part 10 to make the spindle operative with a fixed tool and with a rotary tool, respectively.

In accordance with an embodiment, the locking means 60 comprise a first element 61 fixedly connected to the rotary part 20, a second element 62 fixedly connected to the stationary part 10 and a third element 63 that is movable with respect to the first and second element 61, 62. Advantageously, the third element 63 is movable along the axis X-X with respect to the first and second element 61, 62.

In the locked configuration (figure 1a), the third element 63 engages the first and the second element 61, 62 to lock the rotary part 20 with respect to the stationary part 10.

In the unlocked configuration (figure 1b), the third element 63 is disengaged from the first and second element 61, 62 to allow the rotation of the rotary part 20 with respect to the stationary part 10.

Advantageously, each of the first, second and third elements 61, 62, 63 comprises an annular element bearing a respective front toothing, for example of the Hirth type, 61a, 62a, 63 a.

The annular element 63 is positioned in an annular cavity 64 formed between the stationary part 10 and the rotary part 20. The annular cavity 64 is in fluid communication with fluid-dynamic actuation means (not shown in the figures).

Such an annular element 63 is axially movable from and towards the annular elements 61, 62 to engage and disengage such annular elements 61, 62 so as to lock and unlock the rotary part 20 with respect to the stationary part 10. Such axial movement of the annular element 63 is determined by the fluid-dynamic actuation means.

In the example, when pressure is given to the fluid present in the annular cavity 64, the annular element 63 moves axially towards the annular elements 61, 62 until the front toothing 63a carried by it engages with the front toothings 61a, 62a of the two annular elements 61, 62 and between the abutments 62b and 61b. In this way, the rotary part 20 is locked with respect to the stationary part 10.

When pressure is removed in the annular cavity 64, the annular element 63 moves axially to move away from the annular elements 61, 62 until the front toothing 63a disengages from the front toothings 61a, 62a of the two annular elements 61, 62. In this way, the rotary part 20 is unlocked with respect to the stationary part 10.

According to an embodiment, elastic means 65 are interposed between the second element 62 and the third element 63 so as to generate the disengagement of the front toothing 63a from the front toothings 61a, 62a in the unlocking step of the rotary part 20 from the stationary part 10.

In the example, the element 62 and the element 63 have respective seats 66, 67 having a bottom 66a, 67a against which the opposite ends of the elastic means 65 abut and act.

The spindle 1 also comprises a first annular part 70 connected to the outer rings 41b of the first group of bearings 40 and arranged between the first group of bearings 40 and the stationary part 10.

The spindle 1 also comprises connection means 71 to connect and disconnect the annular part 70 to the stationary part 10.

In particular, in the locked configuration (figure 1a), the connection means 71 are configured so that the annular part 70 is disconnected from the stationary part 10 so that the outer rings 41b of the first group of bearings 40 are unconstrained from the stationary part 10 in operation with a fixed tool.

In the unlocked configuration (figure 1b), the connection means 71 are configured so that the annular part 70 is connected with the stationary part 10 so that the outer rings 41b of the first group of bearings 40 are constrained to the stationary part 10 in operation with a rotary tool.

In accordance with an embodiment, the connection means 71 comprise a front toothing, for example of the Hirth type, 70a made on the annular part 70 and a front toothing 62c, for example of the Hirth type, made on the second element 62 axially on the opposite side to the front toothing 62a of the locking means 60.

The annular part 70 is positioned in an annular cavity 72 formed between the stationary part 10 and the rotary part 20.

In particular, the annular part 70 at least partially surrounds the first group of bearings 40.

An annular chamber 72a in fluid communication with fluid-dynamic actuation means (not shown in the figures) is interposed between the annular part 70 and the annular cavity 72.

The annular part 70 is axially movable from and towards the annular element 62 to engage and disengage such an annular element 62 so as to connect and disconnect the annular part 70, and therefore the outer ring 41b of the first group of bearings 40, with the annular element 62.

Such axial movement of the annular part 70 is determined by the fluid-dynamic actuation means.

In the example, when pressure is given to the fluid present in the annular cavity 72a, the annular part 70 moves axially towards the annular element 62 until the front toothing 70a carried by it engages with the front toothing 62c of the annular element 62. In this way the outer ring 41b of the first group of bearings 40 is connected and thus constrained to the annular element 62 and, through this, to the stationary part 10.

When pressure is removed in the annular cavity 72, the annular part 70 moves axially to move away from the annular element 62 until the front toothing 70a disengages from the front toothing 62c of the annular element 62. In this way the outer ring 41b of the first group of bearings 40 is disconnected and thus unconstrained from the annular element 62 and, therefore, from the stationary part 10.

It should be noted that during the actuation of the locking means 60, the rotary part 20 undergoes an axial displacement towards the front part to carry out the locking of the rotary part 20 with respect to the stationary part 10 - with disconnection of the outer ring 41b of the first group of bearings 40 from the stationary part 10 - to allow the rigid support of a fixed tool by the rotary part 20, and an axial displacement towards the rear part to carry out the unlocking of the rotary part 20 from the stationary part 10 - with connection of the outer ring 41b of the first group of bearings 40 with the stationary part 10 - to allow the support of the rotary part 20 and therefore of a rotary tool fixed to it by the two groups of bearings 40.

The extent of the axial displacement of the rotary part 20 is minimal and even of the order of 0.1 mm. Indeed, in order to carry out the locking of the locking means 60, it is not necessary to completely disconnect the front toothing 70a of the annular part 70 from the front toothing 62c of the element 62. Indeed, it is sufficient for the rotary part 20 with the first group of bearings 40 to be free to move axially along the axis X-X and radially perpendicular to the axis X-X so as to allow the locking means 60 to lock the rotary part 20 with respect to the stationary part 10 without generating loads on the bearings of the first group 40 that could otherwise be damaged by continuous axial displacements.

Advantageously, the disconnection is generated by the locking movement of the rotary part 20 that through the group of bearings 40 axially moves the annular part 70 with the respective front toothing 70a.

According to an embodiment, elastic means 73 are interposed between the annular part 70 and the element 62 so as to make it easier to disengage the front toothing 70a from the front toothing 62c in the disconnection step of the annular part 70 from the annular element 62. In the example, the element 62 and the annular part 70 have respective seats 68, 74, having a bottom 68a, 74a against which the opposite ends of the elastic means 65 abut and act.

In accordance with an embodiment, the spindle 1 also comprises a second annular part 80 connected to the outer rings 51b of the second group of bearings 50 and interposed between the second group of bearings 50 and the stationary part 10.

In the example, the second annular part 80 comprises an annular element 81 that surrounds the bearings 51, 52 and a flange 82 fixed to the annular element 81 and projecting transversally to the axial direction. Elastic means 83 are arranged between the flange 82 and an annular piece 84 fixedly connected to the stationary part 10. These elastic means 83 act, through the flange 82, the annular element 81 and the bearings 51, 52, on the rotary part 20 in the axial direction towards the rear portion 3 of the spindle 1 in collaboration with the fluid-dynamic thrusting that acts on the annular part 70 to make the front toothing 70a carried by it engage with the front toothing 62c of the annular element 62, fixedly connected to the stationary part 10 to allow the rotation of the rotary part 20.

A ball bushing 85 is interposed between the annular element 81 and the annular piece 84 for avoiding the formation of friction between them.

As can be appreciated from what has been described above, the tool-holding spindle according to the present invention achieves the preset purposes, making it possible to effectively lock and unlock the rotary part with respect to the stationary part, avoiding mechanically stressing the support bearings of the rotary part. Thanks to this, it is possible to make the front group of bearings even with three opposite bearings in an axially rigid manner whereas some known solutions of the state of the art do not allow this structure to be made precisely due to the stresses that the bearings would undergo.

## Claims

1. Tool-holding spindle (1) comprising:
- a stationary part (10) defining a cavity (11) extending along a longitudinal axis (X-X),
- a rotary part (20) mounted in said cavity (11) to rotate with respect to said stationary part (10) around said longitudinal axis (X-X), said rotary part (20) being intended to support a tool,
- a first group of bearings (40) and a second group of bearings (50) spaced along said longitudinal axis (X-X) from the first group of bearings (40), each bearing (41, 42, 43, 51, 52) of the first (40) and of the second (50) group of bearings having an inner ring (41a, 42a, 43a, 51a, 52a) fixed to said rotary part (20) and an outer ring (41b, 42b, 43b, 51b, 52b),
- locking means (60) movable between a locked configuration and an unlocked configuration to respectively lock and unlock said rotary part (20) with respect to said stationary part (10) to make the spindle operate with a fixed tool and a rotary tool, respectively, wherein the locking means (60) comprise
- a first element (61) fixedly connected to said rotary part (20),
- a second element (62) fixedly connected to said stationary part (10), and
- a third element (63) which is positioned in an annular cavity (64) formed between the stationary part (10) and the rotary part (20) and which is axially movable with respect to said first (61) and second element (62),
wherein in said locked configuration, said third element (63) engages said first (61) and second (62) element to lock the rotary part (20) with respect to the stationary part (10), and in said unlocked configuration, said third element (63) is disengaged from said first (61) and second (62) element to allow the rotation of said rotary part (20) with respect to said stationary part (10),
**characterized by**
- an annular part (70) which is positioned in an annular cavity (72) formed between the stationary part (10) and the rotary part (20), which is axially movable to engage and disengage the second element (62), which is connected to the outer rings (41b, 42b, 43b) of said first group of bearings (40) and which is interposed between said first group of bearings (40) and said stationary part (10), and
- connection means (71) to connect and disconnect said annular part (70) with said stationary part (10),
wherein
- in said locked configuration of the rotary part (20), said connection means (71) are designed so that said annular part (70) is disconnected from said stationary part (10) so that the outer rings (41b, 42b, 43b) of said first group of bearings (40) are unconstrained from said stationary part (10) in operation with a fixed tool,
- in said unlocked configuration of the rotary part (20), said connection means (71) are designed so that said annular part (70) is connected with said stationary part (10) so that the outer rings (41b, 42b, 43b) of said first group of bearings (40) are constrained to said stationary part (10) in operation with a rotary tool.

2. Tool-holding spindle (1) according to claim 1, wherein each of said first, second and third element (61, 62, 63) comprises an annular element bearing a front toothing (61a, 62a, 63a).

3. Tool-holding spindle (1) according to claim 2, wherein said connection means (71) comprise a front toothing (70a) made on said annular part (70) and a front toothing (62c) made on said second element (62) on the opposite side to the front toothing (62a) of the locking means (60).

4. Tool-holding spindle (1) according to any one of claims 1 to 3, wherein said third element (63) and said annular part (70) are axially movable by fluid-dynamic actuation.

5. Tool-holding spindle (1) according to claim 4, wherein elastic means (67) are interposed between said second element (62) and said third element (63).

## Patentansprüche

1. Werkzeughaltespindel (1), aufweisend:
- ein ortsfestes Teil (10), das einen Hohlraum (11) bestimmt, welcher entlang einer Längsachse (X-X) verläuft,
- ein drehendes Teil (20), das im Hohlraum (11) zum Drehen bezüglich des ortsfesten Teils (10) um die Längsachse (X-X) angebracht ist, wobei das drehende Teil (20) ein Werkzeug stützen soll,
- eine erste Gruppe von Lagern (40) und eine zweite Gruppe von Lagern (50), welche entlang der Längsachse (X-X) von der ersten Gruppe von Lagern (40) beabstandet ist, wobei jedes Lager (41, 42, 43, 51, 52) der ersten (40) und der zweiten (50) Gruppe von Lagern einen Innenring (41a, 42a, 43a, 51a, 52a), der am drehenden Teil (20) befestigt ist, und einen Außenring (41b, 42b, 43b, 51b, 52b) aufweist,
- Sperrmittel (60), die zwischen einer gesperrten Konfiguration und einer entsperrten Konfiguration zum jeweiligen Sperren und Entsperren des drehenden Teils (20) bezüglich des ortsfesten Teils (10) beweglich sind, um die Spindel mit einem starren Werkzeug bzw. einem drehenden Werkzeug arbeiten zu lassen, wobei die Sperrmittel (60) aufweisen:
- ein erstes Element (61), das starr mit dem drehenden Teil (20) verbunden ist,
- ein zweites Element (62), das starr mit dem ortsfesten Teil (10) verbunden ist, und
- ein drittes Element (63), das in einem ringförmigen Hohlraum (64), welcher zwischen dem ortsfesten Teil (10) und dem drehenden Teil (20) ausgebildet ist, angeordnet ist, und das axial bezüglich des ersten (61) und zweiten Elements (62) beweglich ist,
wobei in der gesperrten Konfiguration das dritte Element (63) das erste (61) und zweite (62) Element zum Sperren des drehenden Teils (20) bezüglich des ortsfesten Teils (10) in Eingriff nimmt, und in der entsperrten Konfiguration das dritte Element (63) zum Ermöglichen der Drehung des drehenden Teils (20) bezüglich des ortsfesten Teils (10) aus dem ersten (61) und zweiten (62) Element ausgerückt ist,
**gekennzeichnet durch**
- ein ringförmiges Teil (70), das in einem ringförmigen Hohlraum (72), der zwischen dem ortsfesten Teil (10) und dem drehenden Teil (20) ausgebildet ist, angeordnet ist, das zur Ineingriffnahme und Freigabe des zweiten Elements (62) axial beweglich ist, das mit den Außenringen (41b, 42b, 43b) der ersten Gruppe von Lagern (40) verbunden ist, und das zwischen der ersten Gruppe von Lagern (40) und dem ortsfesten Teil (10) eingeschoben ist, und
- Verbindungsmittel (71) zum Verbinden und Trennen des ringförmigen Teils (70) mit dem bzw. vom ortsfesten Teil (10),
wobei
- in der gesperrten Konfiguration des drehenden Teils (20) die Verbindungsmittel (71) derart ausgelegt sind, dass das ringförmige Teil (70) vom ortsfesten Teil (10) getrennt ist, sodass die Außenringe (41b, 42b, 43b) der ersten Gruppe von Lagern (40) beim Betrieb mit einem starren Werkzeug vom ortsfesten Teil (10) uneingeschränkt sind,
- in der entsperrten Konfiguration des drehenden Teils (20) die Verbindungsmittel (71) derart ausgelegt sind, dass das ringförmige Teil (70) mit dem ortsfesten Teil (10) verbunden ist, sodass die Außenringe (41b, 42b, 43b) der ersten Gruppe von Lagern (40) beim Betrieb mit einem drehenden Werkzeug auf das ortsfeste Teil (10) eingeschränkt sind.

2. Werkzeughaltespindel (1) nach Anspruch 1, wobei jedes des ersten, zweiten und dritten Elements (61, 62, 63) ein ringförmiges Element umfasst, das eine vordere Verzahnung (61a, 62a, 63a) aufweist.

3. Werkzeughaltespindel (1) nach Anspruch 2, wobei die Verbindungsmittel (71) eine vordere Verzahnung (70a), die am ringförmigen Teil (70) gebildet ist, und eine vordere Verzahnung (62c), die am zweiten Element (62) gebildet ist, auf der gegenüberliegenden Seite zur vorderen Verzahnung (62a) der Sperrmittel (60) umfassen.

4. Werkzeughaltespindel (1) nach einem der Ansprüche 1 bis 3, wobei das dritte Element (63) und das ringförmige Teil (70) durch fluiddynamische Betätigung axial beweglich sind.

5. Werkzeughaltespindel (1) nach Anspruch 4, wobei elastische Mittel (67) zwischen das zweite Element (62) und das dritte Element (63) eingeschoben sind.

## Revendications

1. Broche porte-outil (1) comprenant :
- une partie fixe (10) définissant une cavité (11) s'étendant le long d'un axe longitudinal (X-X),
- une partie rotative (20) montée dans la cavité (11) pour tourner par rapport à la partie fixe (10) sur l'axe longitudinal (X-X), la partie rotative (20) étant destinée à supporter un outil,
- un premier groupe de paliers (40) et un second groupe de paliers (50) espacés le long de l'axe longitudinal (X-X) depuis le premier groupe de paliers (40), chaque palier (41, 42, 43, 51, 52) du premier (40) et du second (50) groupe de paliers présentant une bague interne (41a, 42a, 43a, 51a, 52a) fixée sur la partie rotative (20) et une bague externe (41b, 42b, 43b, 51b, 52b),
- un moyen de verrouillage (60) mobile entre une configuration verrouillée et une configuration déverrouillée pour verrouiller et déverrouiller respectivement la partie rotative (20) par rapport à la partie fixe (10) pour que la broche fonctionne avec un outil fixe et un outil rotatif, respectivement, sachant que le moyen de verrouillage (60) comprend
- un premier élément (61) relié fixement à la partie rotative (20),
- un deuxième élément (62) relié fixement à la partie fixe (10), et
- un troisième élément (63) qui est positionné dans une cavité annulaire (64) formée entre la partie fixe (10) et la partie rotative (20) et qui est mobile axialement par rapport au premier (61) et au second (62) élément,
sachant que dans la configuration verrouillée, le troisième élément (63) engage le premier (61) et le second (62) élément pour verrouiller la partie rotative (20) par rapport à la partie fixe (10), et dans la configuration déverrouillée, le troisième élément (63) est désengagé du premier (61) et du second (62) élément pour permettre la rotation de la partie rotative (20) par rapport à la partie fixe (10),
**caractérisé par**
- une pièce annulaire (70) qui est positionnée dans une cavité annulaire (72) formée entre la partie fixe (10) et la partie rotative (20), qui est mobile axialement pour engager et désengager le second élément (62), qui est reliée aux bagues externes (41b, 42b, 43b) du premier groupe de paliers (40) et qui est interposée entre le premier groupe de paliers (40) et la partie fixe (10), et
- un moyen de liaison (71) pour connecter et déconnecter la pièce annulaire (70) d'avec la partie fixe (10),
sachant que
- dans la configuration verrouillée de la partie rotative (20), le moyen de liaison (71) est conçu de telle façon que la pièce annulaire (70) est déconnectée de la partie fixe (10) de façon à ce que les bagues externes (41b, 42b, 43b) du premier groupe de paliers (40) soient débloquées de la partie fixe (10) en fonctionnement avec un outil fixe,
- dans la configuration déverrouillée de la partie rotative (20), le moyen de liaison (71) est conçu de telle façon que la pièce annulaire (70) est connectée avec la partie fixe (10) de façon à ce que les bagues externes (41b, 42b, 43b) du premier groupe de paliers (40) soient bloquées sur la partie fixe (10) en fonctionnement avec un outil rotatif.

2. Broche porte-outil (1) selon la revendication 1, dans laquelle chacun des premier, deuxième et troisième éléments (61, 62, 63) comprend un élément annulaire supportant une indentation avant (61a, 62a, 63a).

3. Broche porte-outil (1) selon la revendication 2, dans laquelle le moyen de liaison (71) comprend une indentation avant (70a) réalisée sur la pièce annulaire (70) et une indentation avant (62c) réalisée sur le second élément (62) sur le côté opposé à l'indentation avant (62a) du moyen de verrouillage (60).

4. Broche porte-outil (1) selon l'une quelconque des revendications 1 à 3, dans laquelle le troisième élément (63) et la pièce annulaire (70) sont mobiles axialement par un actionnement par dynamique des fluides.

5. Broche porte-outil (1) selon la revendication 4, dans laquelle un moyen élastique (67) est intercalé entre le deuxième élément (62) et le troisième élément (63).
